# EUROPEAN PATENT APPLICATION

(11) **EP 2 586 632 A1**
(43) Date of publication of application: **01.05.2013**
(21) Application number: 10838386.0
(22) Date of filing: 15.07.2010
(51) Int. Cl.: B60C 23/04, G01L 17/00, B60C 29/06

(54) **IMPACT-PROTECTION AND DAMAGE-REDUCTION STRUCTURE WITH TIRE PRESSURE GAUGE FOR AIR VALVE**

(30) Priority: 24.06.2010 CN 201020237033 U
(71) Applicant: Steelmate Co., Ltd., Zhongshan, Guangdong 528425 (CN)
(72) Inventor: LI, Zhitao, Zhongshan Guangdong 528425 (CN)
(74) Representative: Grünecker, Kinkeldey, Stockmair & Schwanhäusser
(86) International application number: PCT/CN2010/075168
(87) International publication number: WO 2011/160315

(57) **Abstract**

The invention discloses an anti-impact device for tire pressure gauge with a gas nipple. The tire pressure gauge includes an enclosure and a gas nipple. The enclosure has a concave spherical surface, while the gas nipple has a hollowed tube. The tube includes a gas inlet and a gas outlet, a gimbal joint being disposed at an outer side of the gas outlet along axial direction of the gas nipple, the gimbal joint being connected with the concave spherical surface in universal manner. A weak portion is defined on the end of the gas inlet of the tube, the thickness of the weak portion being smaller than the rest portion of the tube. As such, only the gas nipple is damaged, while the rest components of the tire pressure gauge are kept from being damaged. As a result, to make the entire tire pressure gauge working well, replacement may only be made to the gas nipple together with the gimbal joint. Replacement of the gas nipple results in less cost when compared to replacement of the entire gauge.

## Description

### Field of the Invention

The invention relates to an automobile safety assistant device and more particularly, relates to an anti-impact device for tire pressure gauge with a gas nipple.

### Background

It is well known in the art to interconnect an automobile tire pressure gauge and a gas nipple together and sell them as a whole. Related technology is disclosed in various patent references around the world including those of the inventor himself.

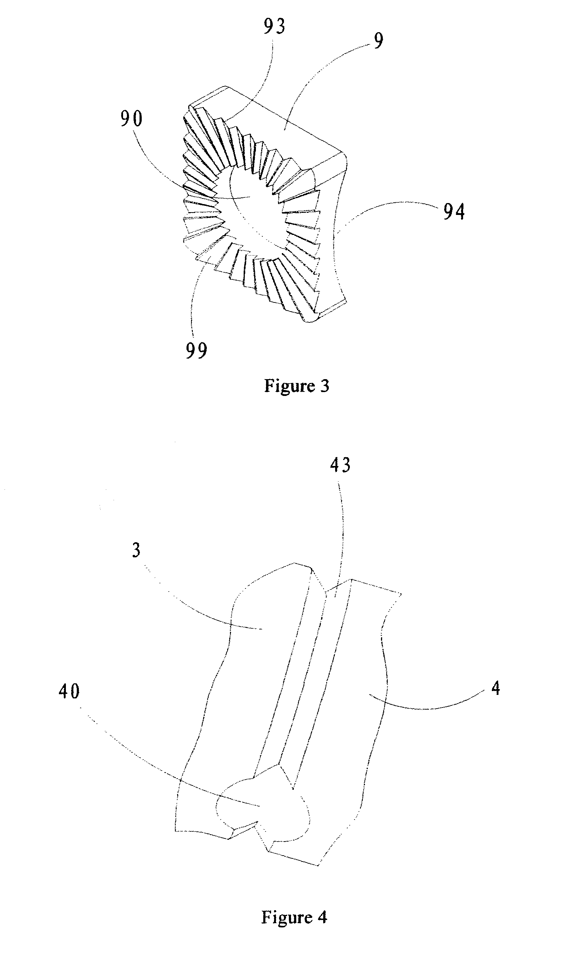

Chinese patent application No. 200910260535.1 filed on Dec 10th, 2009 by the inventor discloses a water-resistant tire pressure detector and a cylindrical coil protective cover. Figure 3 of the above Chinese patent application shows connection between the tire pressure gauge and a gas nipple. As shown in the figure 3, the distal end of the gas nipple is designed to have a ball shape, and the tire pressure gauge has an enclosure which defines a recess therein for receiving the ball-shaped distal end. The ball-shaped distal end engages the recess and can rotate relative to the recess. The tilt angle of the tire pressure gauge with respect to the gas nipple can be adjusted slightly by the above rotational construction after the installation of the gauge, thus the tire pressure gauge being able to be secured firmly onto the wheel hub without the risk of being dismounted by tool.

Chinese Patent No. 201376472Y issued on Jan 6, 2010 discloses an improvement upon a tire pressure detector. Based on the same mechanism as the above Chinese Patent Application, a screw hole is defined in the back portion of the tire pressure gauge recess and extended through the recess. The tire pressure gauge can be movably attached to a gas nipple by using a screw which passes through the screw hole and engages a screw hole of a gimbal joint. This kind of improvement can also prevent loosening caused by mechanical wear.

In the structure disclosed in above two references, the enclosure of the tire pressure gauge is made of plastic, while the gas nipple and gimbal joint are made of metal and as a result, the mechanical strength of the gauge is much weak than the gas nipple. The tire pressure gauge will be damaged earlier than the gas nipple when the tire is removed from the wheel hub by a maintenance person. In other words, the gas nipple may still work properly while the gauge may have been damaged forever. It is well known that the cost of gauge is much greater than gas nipple. Accordingly, it is desired to reduce the damage and protect the tire pressure gauge when such accidents happen.

### SUMMARY OF THE INVENTION

The object of the invention is to provide an anti-impact device for tire pressure gauge with a gas nipple, which effectively reduces the maintenance cost.

To realize the above object, the following technical solution is provided.

An anti-impact device for tire pressure gauge with a gas nipple is provided. The tire pressure gauge includes an enclosure and a gas nipple. The enclosure has a concave spherical surface, while the gas nipple has a hollowed tube. The tube includes a gas inlet and a gas outlet, a gimbal joint being disposed at an outer side of the gas outlet along axial direction of the gas nipple, the gimbal joint being connected with the concave spherical surface in universal manner. A weak portion is defined on the end of the gas inlet of the tube, the thickness of the weak portion being smaller than the rest portion of the tube.

The weak portion runs across the gas outlet. A buffer portion is provided on the enclosure of the tire pressure gauge for defining the concave spherical surface; the buffer portion has a longitudinal slot defined therein and extended through the entire buffer portion; a threaded hole is defined in the gimbal joint along the axial direction of the gas nipple; and a bolt passes through the slot and threaded hole of the gimbal joint and then is locked with the threaded hole such that location of a cap portion of the bolt is limited by the slot. A gasket is disposed between the cap portion of the bolt and buffer portion. The gasket has a through hole defined therein for permission of passage of the bolt; one side of the gasket facing the buffer portion is configured to be a smooth concave spherical surface, while the other side thereof facing the cap portion is configured to be a toothed construction. One side of the cap portion facing the gasket is configured to be a toothed construction meshed with the toothed construction of the gasket. A convex surface of the buffer portion is concentric with the spherical surface of the gimbal joint. A convex surface of the buffer portion is concentric with the spherical surface of the gimbal joint.

Compared with prior art technology, only the gas nipple is damaged, while the rest components of the tire pressure gauge are kept from being damaged. As a result, to make the entire tire pressure gauge working well, replacement may only be made to the gas nipple together with the gimbal joint. Replacement of the gas nipple results in less cost when compared to replacement of the entire gauge.

Other advantages and novel features will be drawn from the following detailed description of embodiments with attached drawings, in which:

### BRIEF DESCRIPTION OF THE DRAWINGS

Figure 1 shows an exploded perspective view of an anti-impact device for tire pressure gauge with a gas nipple according to the invention;

Figure 2 shows a cross-sectional view of the anti-impact device for tire pressure gauge with a gas nipple of the invention;

Figure 3 shows another perspective view of a gasket shown in portion A of figure 1;

Figure 4 shows an enlarged perspective view of a weak portion as shown in portion B of figure 1;

Figure 5 shows a schematic circuit diagram of the tire pressure gauge with a gas nipple of the invention; and

Figure 6 is a view illustrating electrical connection among a transmitting circuit, a conductive member and a gas nipple of the tire pressure gauge of the invention.

### DETAILED DESCRIPTION

Now, further discussion of the invention will be made with reference to accompanying drawings and various embodiments.

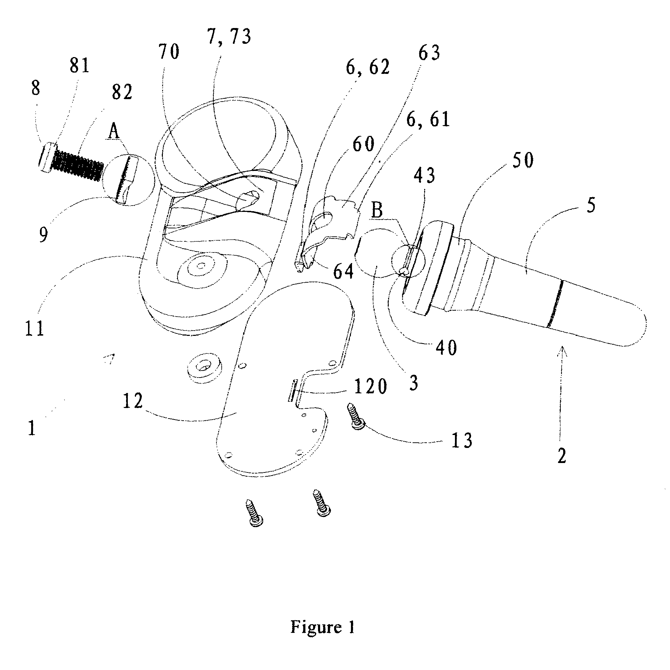

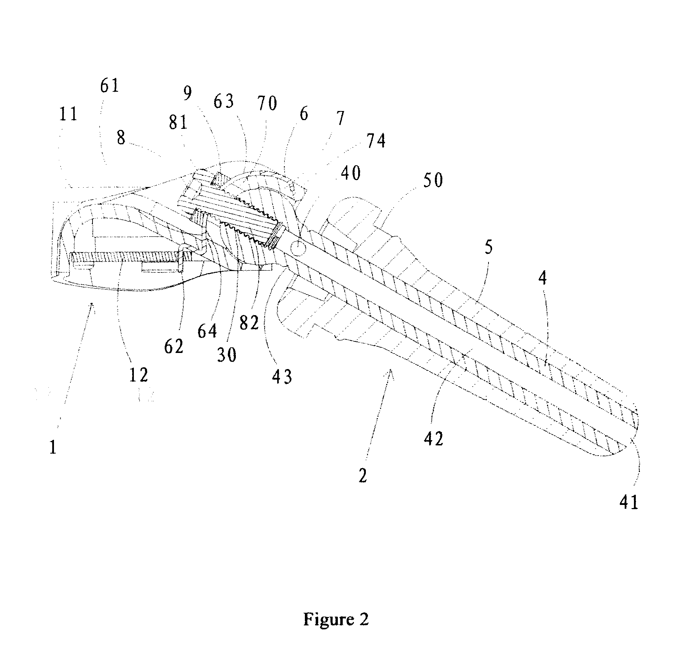

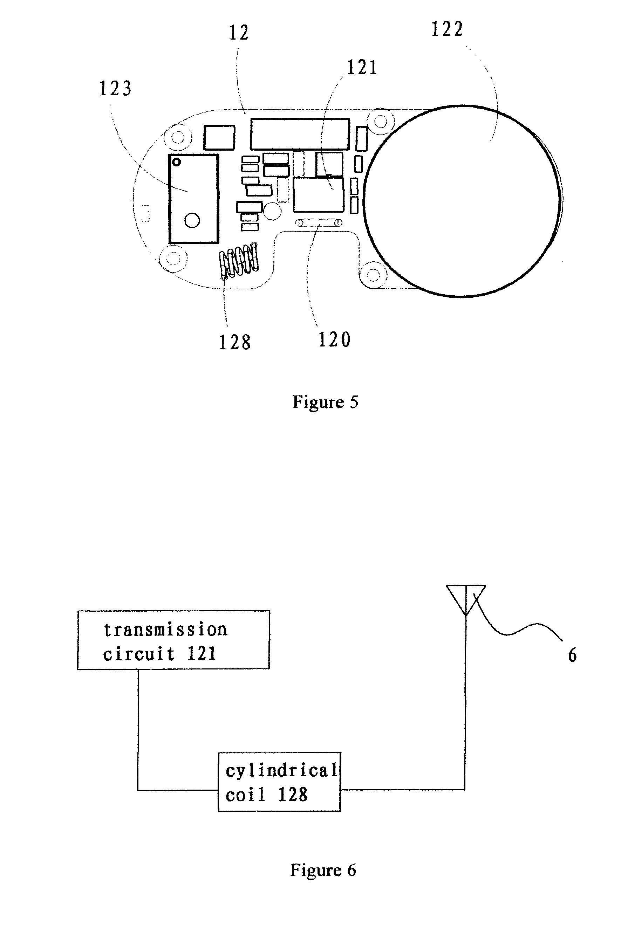

According to the invention, an anti-impact device is designed for a tire pressure gauge. Figures 1 and 2 both show connective relationship between the tire pressure gauge and a gas nipple. As shown in these figures, the tire pressure gauge 1 mainly includes an enclosure 11 and a circuit board 12. A circuit 123 is provided on the circuit board 12 for detecting pressure, temperature and/or humidity of the tire. Also integrated on the circuit board 12 are a transmitting circuit 121 (as shown in figures 5 and 6) used for transmitting detection signal out and a battery 122 as a power supply. All the circuits used by the tire pressure gauge 1 may be incorporated in the same circuit board 12. Some of the circuits are omitted from the circuit board shown in figure 1, while some specific circuits are shown in the circuit board 12 of the gauge 1 in figure 5. The invention can be implemented regardless of these specific circuits and therefore, description to them have been omitted so as not to obscure the invention. With reference to figures 1 and 5, a longitudinal slot 120 is defined in the circuit board 12 for receiving a tongue 62 of a conductive member 6 and realizing electrical connection between the conductive member 6 and a cylindrical coil of the circuit board 12 by means of a plurality of micro-traces (not shown) printed on the board 12. The enclosure 11 and circuit board 12 are interconnected with each other by screw manner directly. That is, the enclosure 11 is made to have a cap shape and correspondingly, the circuit board 12 is designed to have the same area as the enclosure 11. A plurality of screws 13 pass through plural corresponding holes defined in the circuit board 12 and then engage plural corresponding threaded holes defined in the enclosure 11, thus arriving at relative fixation between the enclosure 11 and the circuit board 12 of the gauge 1.

Figures 1 and 2 both illustrate a gas nipple 2 constructed of conductive material such as copper. The gas nipple 2 has a hollowed tube 4 which has a gas inlet 41, a gas passage 42 and a gas outlet 40. The gas inlet 41 is defined at one end of the tube 4, while the gas outlet 40 is defined at a sidewall of the other end thereof. Clearly, the gas travel process of the nipple 2 is as follows: the gas comes in the hollowed passage 42 via the exposed gas inlet 41 of the tube 4, comes along the axial direction of the nipple 2 out of the gas outlet 40 disposed at the sidewall of the tube 4, and finally enters the tire.

The gas nipple 2 is jacketed with a rubber tube 5 with the purpose of isolating the gas nipple 2 with a tire hub. With the location of gas outlet 40 in mind, it is noted that the rubber tube 5 runs the entire length of the gas nipple 2 and terminates at the gas outlet 40 so as not to block flow of the gas at the outlet 40. To keep the rubber tube 5 firmly secured onto the tire hub, a circular recess 50 is defined on the rubber tube 5 at a location where the rubber tube 5 abuts the tire hub. In addition, the contour of the circular recess 50 conforms to that of a metal rim of a hole of the hub.

Gas flowing direction inside the gas nipple 2 is substantially the axial direction of the nipple 2. At an axial distal end of the gas nipple 2, namely, at an axial distal end along gas entering direction, a gimbal joint 3 adjacent the gas outlet 40 is formed integrally with the gas nipple 2. The gimbal joint 3 takes a spherical shape for avoiding eccentricity connection when rotating. Accordingly, the axial direction of the gimbal joint 3 is consistent with that of the gas nipple 2.

As such, it may be described that the gas nipple 2 is located at one side of the gas outlet 40, while the gimbal joint 3 is located at the opposite side thereof. In addition, the nipple 2 and the joint 3 are formed integrally, both are made of conductive material such as copper, and thus both have good conductivity.

Referring to figure 4, to realize anti-impact effect, the connection between the gimbal joint 3 and the gas nipple 2 must be weakened in strength somewhere. To this end, a weak portion 43 is defined between the gas nipple 2 and gimbal joint 3 and located adjacent the gas outlet 40. More particularly, the weak portion 43 is generated by forming a circular groove 43 in an outer wall of the gas nipple 2, thus the tube 4 is thinned in the groove 43. As the weak portion 43 is defined by above groove, the thickness of the tube 4 at the weak portion 43 is smaller than that at the rest portion of the tube 4. As the weak portion 43 is weakened in its strength, the circular groove 50 of the rubber tube 5 serves as a fulcrum of a lever mechanism once the gas nipple 2 is inserted into the wheel hub. Once forces are applied to the tire pressure gauge 1, these forces will be transferred to the gimbal joint 3. As the weak portion 43 is formed at the central location of the joint 3, the forces will cause breakage of the weak portion 43. As such, only the gas nipple 2 is damaged, while the rest components of the tire pressure gauge 1 are kept from being damaged. As a result, to make the entire tire pressure gauge 1 working well, replacement may only be made to the gas nipple 2 together with the gimbal joint 3. Replacement of the gas nipple 2 results in less cost when compared to replacement of the entire gauge 1.

The connection between the gimbal 3 and tire pressure gauge 1 must be strong so that the weak portion 43 will work well. With reference to figures 1-2, a threaded hole 30 is defined inside the gimbal joint 3 along its axial direction (it is also the axial direction of the gas nipple 2). This threaded hole 30, as a second engagement member of the embodiment, will cooperate with a first engagement member (which will be discussed hereinafter) to arrive at the secure connection between the gimbal joint 3 and the tire pressure gauge 1.

Reference is made to figures 1 and 2, to obtain secure connection between the gimbal joint 3 and tire pressure gauge 1, a buffer portion 7 is formed integrally with the enclosure 11 of the tire pressure gauge 1. The buffer portion 7 has an arched shape and includes a concave spherical surface 74 and a convex spherical surface 73. The concave spherical surface 74 conforms to the spherical surface of the gimbal joint 3 such that the joint 3 can rotate freely with respect to the concave spherical surface 74. The second engagement member of the gimbal joint 3 may cooperate with the first engagement member which will be discussed below. To this end, a slot 70 is defined in the buffer portion 7. The slot 70 has a sufficient longitudinal length so as to mate the longitudinal length of a guiding opening 60 of the conductive member 6. The sufficient longitudinal length of the slot 70 ensures that the first engagement member will be able to travel freely through the slot 70 back and forth during the pitching movement of the gimbal joint 3. There is no requirement for the lateral dimension and shape of the slot 70.

Referring to figures 1 and 2, a conductive member 6 is disposed on the buffer portion 7 at its convex spherical surface. The conductive member 6 is made of conductive metal such as copper. The conductive member 6 has a base body 61 of arched shape, a concave spherical surface 64 contacting tightly with the convex spherical surface 73 of the buffer portion 7, and a convex spherical surface 63 opposed to the concave spherical surface 64. The convex spherical surface 63 is designed to be concentric completely with the gimbal joint 3. As a result, when the base body 61 of the conductive member 6 covers the buffer portion 7 and in turn engages the convex spherical surface 73 of the buffer portion 7, the convex spherical surface 63 of the base body 61 of the conductive member 6 will be equidistant from the spherical center of the gimbal joint 3 everywhere.

The conductive member 6 further includes a tongue 62 which extends from a bottom portion of the base body 61 and then is curved. The tongue 62 passes through a window (not identified with a numeral) predefined in the enclosure 11 of the tire pressure gauge 1, comes inside the enclosure 11 and finally is inserted into the slot 120 of the circuit board 12 and welded thereon. Thus, the tongue 62 is secured physically to the circuit board 12. Moreover, the electrical connection between the tongue 62 and cylindrical coil of the circuit board is also obtained. It is noted that the bending of the tongue 62 relative to the base body 61 is made under consideration of shape constraint of the tire pressure gauge 1. In other words, the tongue 62 may also be extended directly from the base body 61 without subject to any bending.

The base body 61 of the conductive member 6 has a longitudinal guiding opening 60 defined therein. The extending direction of the slot 60 is perpendicular to the plane the circuit board 12 lies in. The adjustment of the pitch angle between the tire pressure gauge 1 and gas nipple 2 is realized by the location restriction of the first engagement member. This pitch angle adjustment may also be achieved by adjusting the pitch angle between the plane in which the circuit board 12 lies and the axis of the gas nipple 2. The guiding opening 60 is limited to be longitudinal so as to confine the movement distance and range of the first engagement member. In addition, the width of the guiding opening 60 is also limited so that a portion of the first engagement member received inside the guiding opening has a width corresponding to that of the guiding opening 60.

The conductive member 6 may be fixed to the enclosure 11 by insertion of the lateral sides of the conductive member 6 inside the predefined slots (not illustrated) of the enclosure 11. To obtain more stable fixation, screws (not shown) may be used to secure the conductive member 6 to the buffer portion 7.

The first engagement is embodied in this example as a bolt 8 particularly designed for the present invention. The bolt 8 has a threaded post 82 and a cap portion 81 with a toothed portion (not shown) formed on its bottom. The threaded post 82, the guiding opening 60 of the conductive member 6, the slot 70 of the buffer portion 7 and the threaded hole 30 of the gimbal joint 3 are corresponding with each other in their location relationship. Concretely, both the guiding opening 60 and slot 70 permit passage of the threaded post 82 therethrough. In addition, the threaded hole 30 of the gimbal joint 3, as a second engagement member, permits being locked with the threaded post 82. The cap portion 81 of the bolt 8 serves as a location limiting member in this embodiment, and the width of the cap portion 81 is larger than the lateral width of the guiding opening 60 of the conductive member 6. By this way, the cap portion 81 will be pressured against the base body 61 of the conductive member after the threaded post 82 of the bolt 8 passes through the guiding opening 60 of the conductive member 6 and slot 70 of the buffer portion 7 and finally reaches the threaded hole 30 of the gimbal joint 3, thereby the bolt 8 being barred by the cap portion 81 from completely passing through the guiding opening 60. It is evident from figure 2 that the sealing effect is obtained when the threaded post 82 is locked with the gimbal joint 3. Consequently, the hollowed construction of the gas nipple 2 may also be extended into the gimbal joint 3, since the gas nipple 2 may be sealed axially by the threaded post 82.

Clearly, gimbal connection is realized by engagement between the gimbal joint 3 and the concave spherical surface 74 of the buffer portion 7. The connection between the gimbal joint 3 and enclosure 11 of the tire pressure gauge 1 may be enhanced by engagement of the second engagement member of the gimbal joint 3 with the first engagement member which passes through the guiding opening 60 of the conductive member 6 and slot 70 of the buffer portion 7. The convex spherical surface 63 of the conductive member 6 is concentric with the spherical surface of the gimbal joint 3 during rotation of the joint 3, since any location on the convex spherical surface 63 of the conductive member 6 has the identical distance from the spherical center of the gimbal joint 3. As such, the distance between the cap portion 81 of the first engagement member which functions as a location limiting member and the convex spherical surface 63 of the conductive member 6 is also constant. By this way, external force imposed to the cap portion 81 will not be conveyed to the entire bolt 8 and accordingly, the connection between the gauge 1 and gas nipple 2 will not be loosened due to loosening of the bolt 8.

Reference is further made to figures 1,2 and 3, to avoid mechanical wear which may be resulted from friction between the bottom portion of the cap portion 81 serving as a location limiting member and convex spherical surface 63 of the conductive member 6, a gasket 9 may be sandwiched between the location limiting member and conductive member 6. The gasket 9 is square and has a through hole 90 defined therein for passage of the threaded post 82 of the bolt 8 therethrough. The bolt 8 passes through the hole 90 of the gasket 9 before it reaches the guiding opening 60. As such, movement of the bolt 8 results in synchronous movement of the gasket 9. A toothed construction 99 meshed with the toothed construction of the cap portion 82 is formed on the gasket 9 at a side 93 facing the cap portion 81, while the other side 94 facing the convex spherical surface 63 of the conductive member 6, of the gasket 9 is machines to be a concave smooth spherical surface. Accordingly, when the gasket 9 is disposed between the bolt 8 and conductive member 6, the side 93 of the gasket 9 meshes with the location limiting member and they are locked together, while the other side 94 thereof is kept slidable with respect to the conductive member 6. Therefore, the gasket 9 can be driven to rotate with the first engagement member. Once the bolt 8, serving as the first engagement member, is locked with the threaded hole 30 of the gimbal joint 3 which functions as the second engagement member, the bottom portion of the cap portion 81 of the bolt 8 will be meshed firmly with the gasket 9. Even in case that external force is imposed to the bolt 8, the bolt 8 will not be disengaged from the gasket 9 because of secure engagement between the cap portion and the gasket 9. In other words, the connection between the bolt 8 and threaded hole 30 of the gimbal joint 3 is significantly enhanced.

To further ensure signal transmission of the tire pressure gauge 1, the first and second engagement members and gasket 9, in addition to the conductive member 6, gimbal joint 3 and gas nipple 2, may also be constructed of conductive metal such as copper. More particularly, it is preferable that the first engagement member be made of conductive material. Comparatively, as the second engagement member of the embodiment of the invention is formed by the threaded hole 30 of the gimbal joint 3, no specific material may be used for the second engagement member. Therefore, when the connection construction of the invention is mounted onto the wheel hub, the transmission circuit 121 of the circuit board 12 of the tire pressure gauge 1 is capable of transmitting signal out of the wheel hub through the conductive member 6, the first engagement member, the second engagement member, the gimbal joint 3 and the gas nipple. As the gas nipple 2 and the wheel hub are isolated from each other by the rubber tube 5, the signal of the tire pressure gauge 1 may be transmitted reliably without risk of causing short circuit between the transmission circuit 121 and the wheel hub.

In the invention, as shown in figures 5-6, as a non-insulated coil of multiple turns, a cylindrical coil 128 is preferably disposed between the transmission circuit 121 and the tongue 62 of the conductive member 6. Here, the non-insulated coil of multiple turns can further enhance impedance match, thereby improving stability of signal transmission of the gas nipple 2 which functions as a signal transmitting component, and extending the signal transmission distance. Moreover, the coil of multiple turns may also be used as a dependent antenna. The cylindrical coil 128, transmission circuit 121 and conductive tongue 62 are connected with each other according to the circuit diagram of figure 6, and the connection is realized by printing micro-traces on the circuit board 12. The micro-traces are not shown on the circuit board since it is well known technology in the related art.

A typical embodiment of the invention has been illustrated above. It is clear from above description that good electric characteristics and structure reliability may be obtained when the tire pressure gauge 1 and gas nipple 2 of the invention are equipped into the tire of a vehicle.

In other embodiments of the invention, various modifications may be made to the invention based on the principle of the invention. Some of modifications are illustrated below.

In an embodiment not shown, the buffer portion 7 may be replaced by the conductive member 6 installed on the enclosure 11 of the tire pressure gauge 1. More specifically, the gimbal joint 3 may be connected directly with the concave spherical surface 63 of the conductive member 6 in universal manner, whereas the bolt 8 passes through the hole 90 of the gasket 9, the guiding opening 60 of the conductive member 6, and then is locked with the threaded hole 30 of the gimbal joint 3. In this embodiment, the thickness of the conductive member 6 should be increased and connection between the member 6 and enclosure 11 should be enhanced.

In another embodiment not shown in the drawings, the first and second engagement members are designed in a more flexible manner. For example, the first engagement member may be embodied as a nut (not shown) which in itself has the function of limiting location. Correspondingly, the second engagement member may be realized by a threaded post of the gimbal joint 3 (not shown). The same good technical effects as above embodiments may be obtained by engagement between the nut and threaded post.

Alternatively, the threaded connection between the first and second engagement members may be replaced by snap connection, thus obtaining the same good effects.

In summary, according to various embodiments of the invention, the adjustment of the pitch angle between the tire pressure gauge and gas nipple may be realized with ease. In addition, reliable connection between the tire pressure gauge and gas nipple and free rotation therebetween can be obtained with ease. Furthermore, signal is transmitted with high efficiency and reliability. Damage caused by forcible impact imposed to the tire pressure gauge can be reduced significantly.

## Claims

1. An anti-impact device for tire pressure gauge with a gas nipple, the tire pressure gauge comprising an enclosure and a gas nipple, the enclosure having a concave spherical surface, the gas nipple having a hollowed tube, the tube comprising a gas inlet and a gas outlet, a gimbal joint being disposed at an outer side of the gas outlet along axial direction of the gas nipple, the gimbal joint being connected with the concave spherical surface in universal manner, wherein a weak portion is defined on the end of the gas inlet of the tube, the thickness of the weak portion being smaller than the rest portion of the tube.

2. The anti-impact device for tire pressure gauge with a gas nipple according to claim 1, wherein the weak portion runs across the gas outlet.

3. The anti-impact device for tire pressure gauge with a gas nipple according to claims 1 or 2, wherein a buffer portion is provided on the enclosure of the tire pressure gauge for defining the concave spherical surface; the buffer portion has a longitudinal slot defined therein and extended through the entire buffer portion; a threaded hole is defined in the gimbal joint along the axial direction of the gas nipple; and a bolt passes through the slot and threaded hole of the gimbal joint and then is locked with the threaded hole such that location of a cap portion of the bolt is limited by the slot.

4. The anti-impact device for tire pressure gauge with a gas nipple according to claim 3, wherein a gasket is disposed between the cap portion of the bolt and buffer portion.

5. The anti-impact device for tire pressure gauge with a gas nipple according to claim 4, wherein the gasket has a through hole defined therein for permission of passage of the bolt; one side of the gasket facing the buffer portion is configured to be a smooth concave spherical surface, while the other side thereof facing the cap portion is configured to be a toothed construction.

6. The anti-impact device for tire pressure gauge with a gas nipple according to claim 5, wherein one side of the cap portion facing the gasket is configured to be a toothed construction meshed with the toothed construction of the gasket.

7. The anti-impact device for tire pressure gauge with a gas nipple according to claim 3, wherein a convex surface of the buffer portion is concentric with the spherical surface of the gimbal joint.

8. The anti-impact device for tire pressure gauge with a gas nipple according to claim 6, wherein a convex surface of the buffer portion is concentric with the spherical surface of the gimbal joint.
